# EUROPEAN PATENT SPECIFICATION

(11) **EP 1 714 361 B1**
(45) Date of publication and mention of the grant of the patent: **17.06.2015**
(21) Application number: 05718973.0
(22) Date of filing: 10.02.2005
(51) Int. Cl.: H02G 3/08, H02G 3/22

(54) **DEVICE TO GENERATE PRESSURE FOR DUCT SEALING**
VORRICHTUNG ZUR DRUCKHERSTELLUNG ZUR KANALABDICHTUNG
DISPOSITIF PERMETTANT DE PRODUIRE UNE PRESSION AFIN DE SCELLER UN CONDUIT

(30) Priority: 12.02.2004 IT RM20040076
(43) Date of publication of application: 25.10.2006
(73) Proprietor: Elcon Megarad S.p.A., 83100 Avelino (IT)
(72) Inventor: GUARDASOLE, Mauro, I-04023 Formia (Latina) (IT); BIAN, Xinsheng, I-03043 Cassino (IT)
(74) Representative: Sneider, Massimo
(86) International application number: PCT/IT2005/000063
(87) International publication number: WO 2005/078883

(56) References cited:
- EP-A- 1 217 288
- US-A- 4 621 483
- US-A- 4 846 278

## Description

### Technical field

This invention concerns a device to generate pressure for duct sealing made by a bag, placed between a cable and a duct which, once inflated,seals by means of pressure the free spaces in the ducts.

### Description of related art

It is known that cables networks, either in the electrical distribution or telecommunication, are equipped with cabinets in which connections between cables or between cables and various equipments, are realized.

These cabinets can be normally placed under ground, and the access of the cables through their walls is exposed to water/moisture penetration if not properly sealed.

Generally plastic ducts are installed in the cabinets to allow the cables to pass through their walls and come inside the cabinets for the needed connections.

These plastic ducts, beyond humidity and water, can be as well entrance for gases coming from possible leakages or failures into the gas distribution pipes, which gases saturating the cabinets can generate serious hazard.

Therefore the problem of sealing the cable ducts is very important.

Different systems have been used in the past, mainly based upon the application of sealants, without reaching satisfying solutions. Main problems are generated by the environmental stresses, like thermal variations and mechanical stresses, together with the actions of pulling and torsion which cables and relevant walls are subject to during their working life.

Similar considerations can be extended to pipelines ducts and other generic installations. Recently a, so called active system, has become popular.

It is made by a bag, inflatable at convenient pressure levels. This bag, placed between the cable and the duct, once inflated, seals by means of pressure, the free spaces in the duct, keeping a constant mechanical action against the different surfaces and absorbing all the stresses mentioned above.

The bag, made by a suitable multi-layer, is sealed at the edges and it is equipped with a valve for the inflation. The layers composing the bag have different characteristics, due to the different functions, like pressure withstanding or waterproofing.

The valve of such a bag is equipped with a "cannula" which allows the inflation from the outside, once properly installed in the duct.

In order to reach the necessary pressure for the duct sealing, different systems are used, among them for instance, a compressor or pressurized gas tanks.

Furthermore, it is necessary to use a manometer to measure the necessary sealing pressure; in fact, a lower pressure would not allow the correct functioning of the sealing system, while a higher pressure could damage the inner cables (i.e. optic fiber cables), or the welding parts of the sealing bag itself

Moreover, as the inner duct surfaces may present some irregularities, like for example in case they are digged directly in the wall, without any plastic duct installation, it is convenient to apply all along the bag a piece of sealant mastic tape.

An efficient sealing is granted by the above mentioned mastic tape when compressed by the bag, against cable and the duct walls. Anyhow, the active system above described presents some weak points:
- the need of a compressor in loco for air inflation, or a pressurised tank in case of gases different from air, and a manometer
- inflation should be made after placing the bag in the duct, often in an uncomfortable position which could affect the correct positioning of the bag inside the duct.

Other solutions have been recently proposed, for instance in patents FR-A 2-277006, EP-A 0-296-388, EP1-217-288A1 in which it is described, in general terms, a multi layers bag able to inflate when a contact is provoked between two initially separated chemical components, which can develop gas by chemical reaction.

For what concern patent FR-A 2-277006, contact between the reagent elements is casual and partial, as it is linked to the positioning of liquid and solid parts after the setting, as well as per the Italian patent nr 1316037 and EP1217288A1 where reagents are kept in separate chambers.

System described in EP 0296388 A1 is made by multiple chambers whose reaction is caused by the pressure generated by the first reaction in the first reagent chamber; in this system it is essential the sequence intervention of the single components chambers, starting from the first and the reagent system is activated in the factory and sealed inside a spray cylinder.

The US 4 846 278 A document describes a device that may be inflated by chemical reaction of two components.

The US 4 621 483 A document describes a bag, and the relative manufacturing method, that contains separate components that following their mixing allow the bag to expand from a deflated to a totally inflated state.

Main inconvenient of the above mentioned solutions is the impossibility to obtain a programmable and certain inflating pressure in the bag, able to apply the sealing function required; the other inconveniences are as follows:
- overall obstruction of the bag which seldom allows an easy application in the right places
- difficulty to identify the exact point on the bag where it is necessary to apply the pressure in order to provoke the inflating chemical reaction.

None of the above-mentioned documents describes or suggests a bag that has a weak closed side that may be broken when subjected to finger pressure by the operator.

### Disclosure of the invention

The subject of the present invention is a multi-layer bag composed by thermoplastic layers joined with suitable adhesives and metallic layers with a barrier function, able to eliminate the inconveniences previously described in which the total contact between reagents parts, which provoke the inflating action of the bag, it is obtained applying vacuum inside the multilayer bag, forcing the reagent system in a stable and fixed position, providing the inner bag which forms the reacting system, with a partial longitudinal or transversal welding which circumscribes the area of the bag where reaction must take place, realizing a preferential breakage side, ulteriorly inner to the reagent system, containing the reaction liquid element.

### Brief description of the drawings

The above and other characteristics of the invention in its main but not restricting production form will be herein after described, referring to the enclosed drawings in which:
- Figure 1 shows a schematic view of cables and ducts configurations

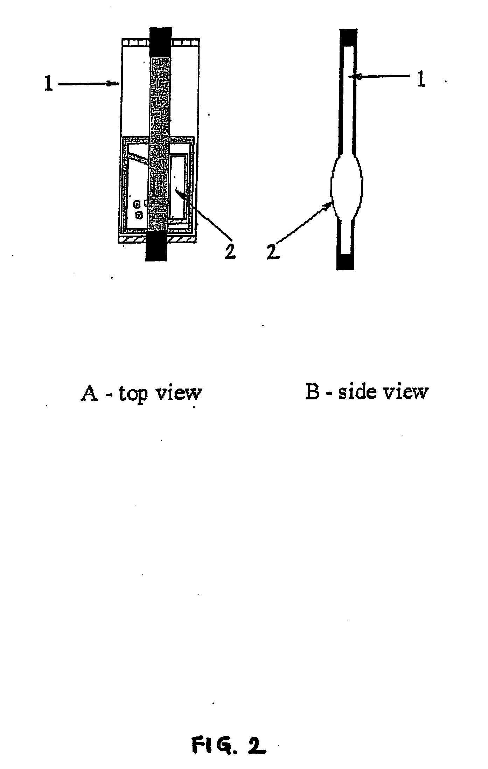

- Figure 2 shows a complete view of the device in which inner reaction system is displayed kept in the desired position by the soldering under vacuum

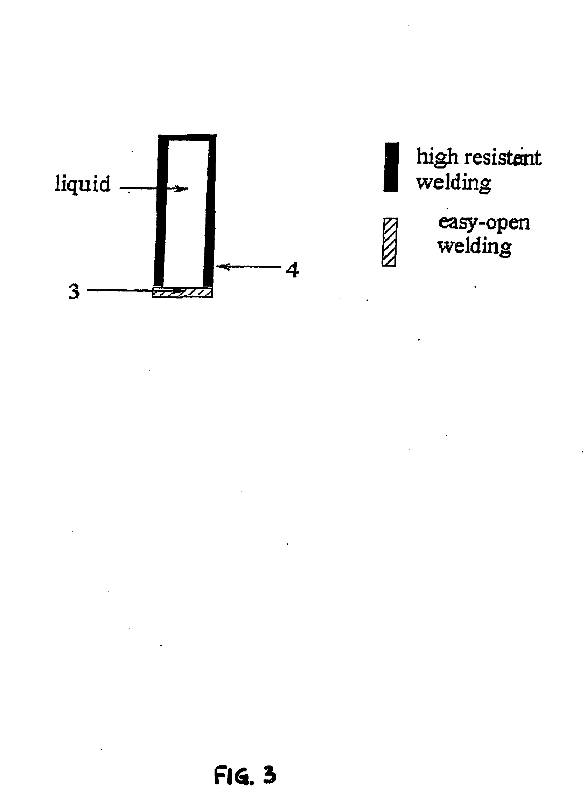

- Figure 3 shows a schematic view of the collapsible bag containing the liquid part of the reagent system

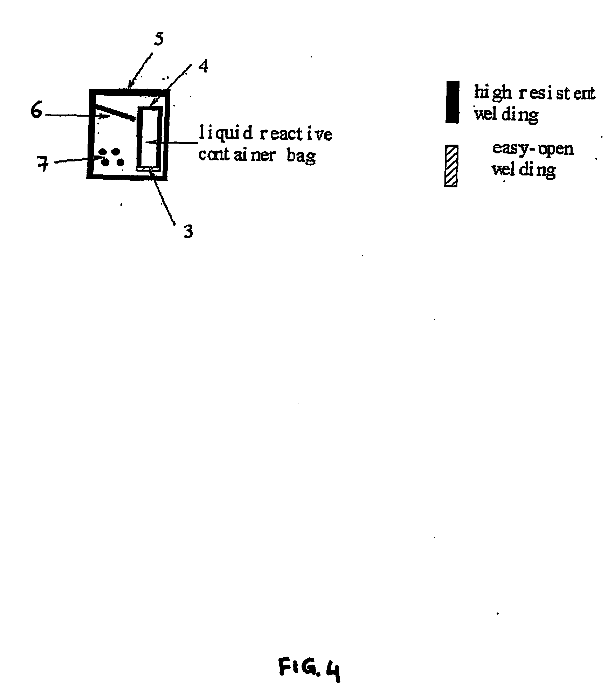

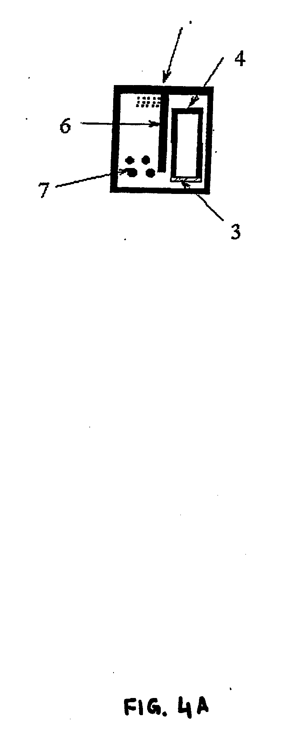

- Figure 4 shows the inner bag containing the entire reaction system provided with a transversal septum
- Figure 4A shows the bag containing the entire reagent system provided with a partial longitudinal welding separator

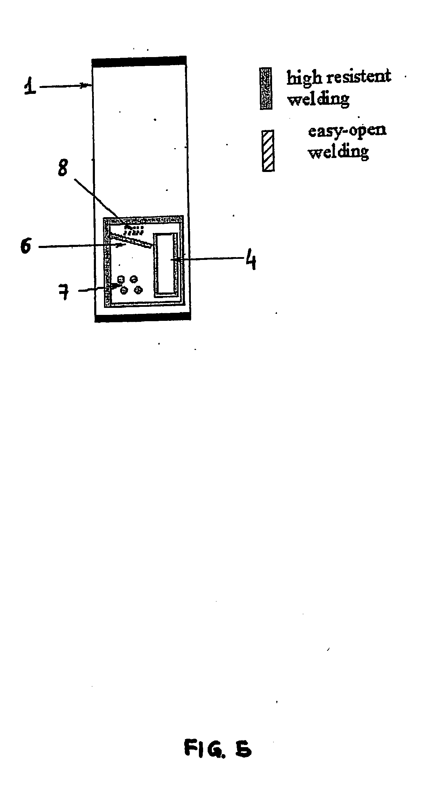

- Figure 5 shows the multilayer bag containing the entire reaction system provided with a transversal welding and with holes to allow gas leaking, said reaction system fixed positioned, by vacuum, in the outer welded multilayer bag.

### Description of a preferred embodiment of the invention

The device is, in a preferred form, made of:
- a first collapsible bag (4), approximately cylinder shaped, soldered by a heavy seal, on three sides one transversal and two longitudinal, where the necessary strength to break said solderings should be not less than 25 N/c. Fourth welding (3) is the one that is to be broken by pressure applied by operator fingers. Strength to be applied to break this soldering is preferably between values of 5 and 10 N/cm ;this welding (3) is weaker than the other three previously described, so that the collapsible bag (4) containing liquid reagent is obliged to break exactly nearby.
- an inner bag (5) constituting the reagent system in which the collapsible bag (4) is contained ; the inner bag (5), is provided with a partial welding (6), longitudinal or transversal, (Picture 4,4a) which contains in its inferior side the solid reagent (7) positioned near the weak welding (3) of the collapsible bag (4)
- a third multilayer bag (1) which contains the reagent system, it means the bag (5) which itself contains the bag (4) with the collapsible side.

The collapsible bag (4) is positioned, as mentioned, inside the inner bag (5) so that the liquid which comes out after that the operator has provoked the breaking on the weaker welding (3) by finger pressure, is by all means totally in touch with solid part (7); reaction is provoked by the operator after that the self-inflating multilayer bag (1) has been correctly positioned.

In order to allow the operating of the reagent device and the inflating of the multilayer bag (1) the inner bag (5) containing the reagent system is provided with micro holes (8) or with microporous materials, apt to consent fast leakage of gas but not of the liquid before it has reacted with the solid part (7).

As already mentioned, in the device object of the present invention, it is compulsory that reaction develops after the installation, and that the multilayer bag (1) is under vacuum, before the reaction take place a part from a slight swelling (2) which shows the point where the operator has to press in order to provoke the breaking of the weak welding (3) of the collapsible bag (4) containing the liquid part and consequently the reaction which allows its inflating.

In some cases, in order to control as much as possible the dimensions of the self inflating multilayer bag (1) suitable for many different ducts and cables configurations, the reaching of operating pressure inside the bag may be obtained starting from a standard volume v1 engaged by the bag in connection with a certain pressure p1, chosen for a particular cable/duct configuration and changing the volume available in the bag by one or more solid cylinders, to be introduced beside the cables, in order to reduce the mentioned volume and therefore increasing the operating pressure according to the mentioned reaction
Pv=k

In this way, a single bag (1), with the intervention of the indicated cylinders, may be suitable for many different cables/ducts configurations.

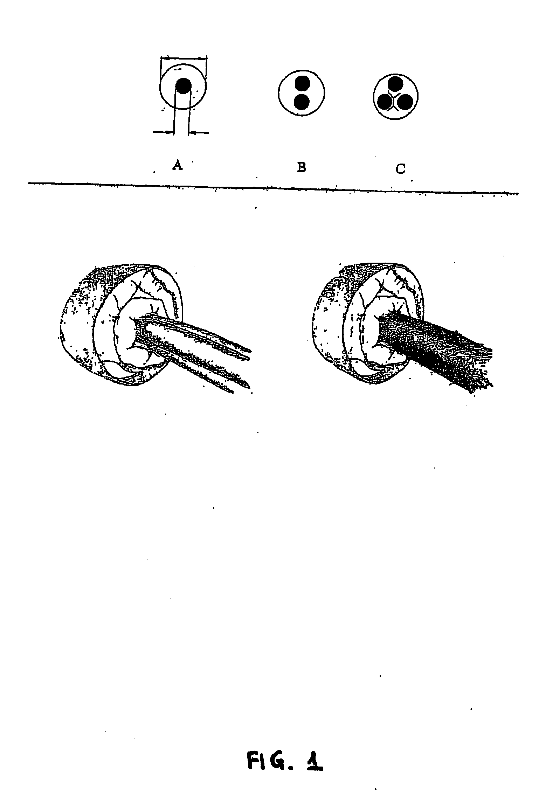

As a not limiting example, we indicate that, in case the substances in the system were citric acid and sodium bicarbonate, the pressure to obtain in case of fig. 1 configuration, where duct diameter was 90mm and cable diameter 35mm, it would be 2.35 atm.

This result can be reached by using 4.4 gr of sodium bicarbonate and 18.0 ml of a solution made at 40% weight of citric acid in water.

In case of fig. 1 configuration with duct diameter 75mm and cables diameter 22mm each, pressure to be obtained would be 3 atm, attainable with 3.1 gr of sodium bicarbonate and 13ml of a solution made at a 40% of citric acid in water.

As the application of the self-inflating multilayer bag (1) will be handled by many operators, and as it is necessary to install the bag correctly around cables and ducts, it is obvious that it will be submitted to a remarkable handling. The vacuum obtained will reduce the multilayer bag to a thin foil, providing an easier installation, as well as maintaining the reagent system, in a safe and irremovable way, in the required position, so that it is possible to provoke its rupture by fingers pressure.

## Claims

1. Device for ducts sealing composed by a multilayer bag (1) containing an inner bag (5), containing a reacting system apt to release gases able to inflate the multilayer bag (1), said reacting system consisting of a solid reagent (7) and of a liquid reagent contained in a collapsible bag (4)
- **characterized in that** the collapsible bag 4 is provided on one of its sides with a weaker welding (3), so that the collapsible bag (4) breaks near said weaker welding (3) when subjected to finger pressure by an operator, **in that** the solid reagent (7) is forced in a stable and fixed position near the weak welding (3) of the collapsible bag (4) by applying vacuum inside the multilayer bag (1) and **in that** said inner bag (5) has a partial welding (6) that circumscribes an area of the bag where the reaction between said solid reagent (7) and said liquid reagent takes places.

2. Device for duct sealing according to claim 1 **characterized by** the fact that the inner bag (5) presents the partial welding (6) in the transversal direction.

3. Device for duct sealing according to claim 1 **characterized by** the fact that the inner bag (5) presents the partial welding in the longitudinal (6) direction.

4. Device for duct sealing according claims 1, 2 and 3 **characterized by** the fact that the inner bag (5) is provided with micro-holes (8) apt to consent the leakage of the gas generated by the reaction between the solid part (7) contained in the inner bag (5) and the liquid one contained in the collapsible bag (4)

5. Device for duct sealing according claims 1, 2 and 3 **characterized by** the fact that the multilayer bag (1) shows before the reaction, a swell (2) showing the point on which it is necessary to apply the finger pressure in order to start the reaction

## Patentansprüche

1. Vorrichtung für Kanalendichtungen bestehend aus einem mehrlagigen Sack (1), der einen inneren Sack (5) umfasst, der ein Reaktionssystem aufweist, das Gase freilässt, die den mehrlagigen Sack (1) aufblasen können. Dieses System wird Reaktionssystem genannt; es besteht aus einem festen Reagenz (7) und aus einem flüssigen Reagenz und ist in einem zusammenklappbaren Sack enthalten (4)
- **dadurch gekennzeichnet, dass** der zusammenklappbare Sack (4) auf einer der beiden Seiten über ein schwächeres Schweißgerät (3) verfügt, so dass der zusammenklappbare Sack (4) das schwächere Schweißgerät (3) unbrauchbar macht, falls der Anlagenbediener mit dem Finger darauf druckt, da sich der feste Reagenz (7) in einer stabilen und fixen Position befindet, und zwar dem schwächeren Schweißgerät (3) des mehrlagigen Sacks (4) anliegend, indem man ein Vakuum im mehrlagigen Sack (1) beaufschlagt; und so dass der innere Sack (5) ein partielles Schweißgerät (6) umfasst, das einen Bereich des Sacks begrenzt, wo die Reaktion zwischen dem sogenannten festen Reagenz (7) und dem sogenannten flüssigen Reagenz stattfindet.

2. Vorrichtung für Kanalendichtungen gemäß Anspruch 1, **dadurch gekennzeichnet, dass** der innere Sack (5) ein partielles Schweißgerät (6) aufweist, das sich in eine Querrichtung erstreckt.

3. Vorrichtung für Kanalendichtungen gemäß Anspruch 1, **dadurch gekennzeichnet, dass** der innere Sack (5) ein partielles Schweißgerät (6) aufweist, das sich in Längsrichtung erstreckt.

4. Vorrichtung für Kanalendichtungen gemäß Ansprüche 1, 2 und 3, **dadurch gekennzeichnet, dass** der innere Sack (5) über Mikro-Löcher (8) verfügt, die das Austreten von dem durch die Reaktion zwischen dem im inneren Sack (5) enthaltenen festen Teil (7) und dem im zusammenklappbaren Sack (4) enthaltenen flüssigen Teil erzeugtes Gas ermöglichen.

5. Vorrichtung für Kanalendichtungen gemäß Ansprüche 1, 2 und 3, **dadurch gekennzeichnet, dass** der mehrlagige Sack (1) vor der Reaktion eine Anschwellung (2) aufweist, die den Punkt zeigt, wo man den Fingerdruck ausüben soll, um die Reaktion zu verursachen.

## Revendications

1. Dispositif d'étanchéité de conduits composé d'un sac multicouche (1) contenant un sac intérieur (5), contenant un système de réaction apte à libérer des gaz capables de gonfler le sac multicouche (1), ledit système de réaction étant composé d'un réactif solide (7) et un réactif liquide contenus dans un sac pliant (4)
- **caractérisé en ce que** le sac pliant (4) est pourvu sur un des ses côtés d'une soudure plus faible (3), de sorte que le sac pliant (4) se casse près de ladite soudure plus faible (3) lorsqu'il est soumis à la pression des doigts par un opérateur, **en ce que** le réactif solide (7) est forcé dans une position stable et fixe près de la soudure plus faible (3) du sac pliant (4) en appliquant le vide à l'intérieur du sac multicouche (1) et **en ce que** ledit sac intérieur (5) présente une soudure partielle (6) qui circonscrit une zone du sac où la réaction entre ledit réactif solide (7) et ledit réactif liquide a lieu.

2. Dispositif d'étanchéité de conduits selon la revendication 1 **caractérisé en ce que** le sac intérieur (5) présente la soudure partielle (6) dans la direction transversale.

3. Dispositif d'étanchéité de conduits selon la revendication 1 **caractérisé en ce que** le sac intérieur (5) présente la soudure partielle (6) dans la direction longitudinale.

4. Dispositif d'étanchéité de conduits selon les revendications 1, 2 et 3 **caractérisé en ce que** le sac intérieur (5) est pourvu de micro-trous (8) aptes à permettre la fuite du gaz produit par la réaction entre la partie solide (7) contenue dans le sac intérieur (5) et celle-là liquide contenue dans le sac pliant (4).

5. Dispositif d'étanchéité de conduits selon les revendications 1, 2 et 3 **caractérisé en ce que** le sac multicouche (1) montre avant la réaction, un gonflement (2) montrant le point sur lequel il est nécessaire d'appliquer la pression des doigts afin de déclencher la réaction.
